# EUROPEAN PATENT SPECIFICATION

(11) **EP 3 441 709 B1**
(45) Date of publication and mention of the grant of the patent: **07.10.2020**
(21) Application number: 18188160.8
(22) Date of filing: 09.08.2018
(51) Int. Cl.: F28D 15/02, G01K 15/00, F28F 13/00

(54) **TEMPERATURE CALIBRATION SYSTEM WITH A CLOSED FLUIDIC SYSTEM**
TEMPERATURKALIBRIERUNGSSYSTEM MIT EINEM GESCHLOSSENEN FLUIDISCHEN SYSTEM
SYSTÈME D'ÉTALONNAGE DE TEMPÉRATURE COMPRENANT UN SYSTÈME FLUIDIQUE FERMÉ

(30) Priority: 10.08.2017 US 201715674347
(43) Date of publication of application: 13.02.2019
(73) Proprietor: Fluke Corporation, Everett, WA 98203 (US)
(72) Inventor: Hirst, Michael, Everett, WA 98203 (US)
(74) Representative: HGF

(56) References cited:
- EP-A2- 2 074 374
- US-A- 5 322 114

## Description

### BACKGROUND

### Technical Field

Embodiments are directed to a temperature calibration system that utilizes a closed fluidic system, such as a thermosiphon or a heat pipe.

### Description of the Related Art

Many temperature calibration systems utilize a closed fluidic system for removing heat from a calibration unit. Typically, the closed fluidic system is a thermosiphon (or a heat pipe) that transfers fluid in the closed system undergoing phase changes between a liquid state and a vapor or gaseous state. The thermosiphon may further be coupled to a cooling assembly to aid in removing heat from the calibration unit. In general, thermosiphons and cooling assemblies perform well when operating at lower temperatures (e.g., below ambient) but are limited in performance when operating at higher temperatures, such as temperatures above ambient. These higher temperatures can cause damage to the cooling assembly used to help cool the fluid in the thermosiphon.

To prevent damage to the cooling assembly, some existing temperature calibration systems have limited the upper temperature limit of the operating ranges of the system. Other temperature calibration systems utilize an expansion tank that is in fluid communication with a condenser of the thermosiphon. As fluid in the thermosiphon rises above a threshold temperature, fluid in a gaseous state migrates through a port at an upper end of the condenser to the expansion tank, which is located below the condenser. When temperatures in the condenser reduce, the gas migrates back to the condenser and the thermosiphon continues to operate as usual. Alternative solutions, however, are desired.

Document EP 2 074 374 discloses a temperature calibrating system comprising a thermo siphon, a heat pipe or an equivalent connected between a cooling unit and a temperature calibration unit.

Document US 5 322 114 discloses an apparatus for limiting the temperature of a body associated with a heating system in which the heat exchange between a first heated body comprising a part of the heating system and a second body, upon exceeding a particular temperature, is to be decreased.

### BRIEF SUMMARY

Embodiments of the invention are set out in the appended claims.

Generally described, embodiments are directed to a temperature calibration system that includes a calibration unit, a closed fluidic system configured to remove heat from the calibration unit, and a cooling assembly configured to remove heat from the closed fluidic system. The closed fluidic system includes a fluid that has a critical point that is less than a temperature that would cause damage to the cooling assembly.

The invention is directed to a temperature calibration system comprising a calibration unit, a closed fluid system, and a cooling assembly. The calibration unit is configured to receive one or more device elements to be calibrated. The closed fluidic system is configured to remove heat from the calibration unit and includes a condenser and an evaporator. The cooling assembly is thermally coupled to the condenser and has a safe upper operating temperature limit. Fluid is in the closed fluidic system and has a critical point that is less than the safe upper operating temperature limit of the cooling assembly.

One embodiment is directed to a method comprising setting a desired temperature of a calibration unit, heating the calibration unit, and removing heat from the calibration unit using a closed fluidic system. The closed fluidic system includes a fluid having a critical point. The method further includes activating a cooling assembly to remove heat from a component of the closed fluidic system using the cooling assembly. The cooling assembly has a safe upper operating temperature limit that is greater than the critical point of the fluid in the closed fluidic system.

The invention is furthermore directed to a method comprising thermally coupling a closed fluidic system to a calibration unit and thermally coupling a cooling assembly to a component of the closed fluidic system. The cooling assembly has a safe upper operating temperature limit. The method further includes providing a fluid in the closed fluidic system. The fluid has a critical point that is less than the safe upper operating temperature limit of the cooling assembly.

### BRIEF DESCRIPTION OF THE SEVERAL VIEWS OF THE DRAWINGS

In the drawings, identical reference numbers identify similar elements or acts. The sizes and relative positions of elements in the drawings are not necessarily drawn to scale. For example, the shapes of various elements and angles are not necessarily drawn to scale, and some of these elements may be arbitrarily enlarged and positioned to improve drawing legibility. Further, the particular shapes of the elements as drawn, are not necessarily intended to convey any information regarding the actual shape of the particular elements, and may have been solely selected for ease of recognition in the drawings.
Figure 1 is a schematic illustration of a cross-sectional view of a temperature calibration system in accordance with one embodiment.
Figure 2 is a block diagram illustrating some of the electrical components of the temperature calibration system of Figure 1.

### DETAILED DESCRIPTION

Generally described, embodiments are directed to a temperature calibration system that includes a calibration unit, a closed fluidic system configured to remove heat from the calibration unit, and a cooling assembly configured to remove heat from the closed fluidic system. The closed fluidic system includes a fluid that has a critical point that is less than a temperature that would cause damage to the cooling assembly. In at least one embodiment, the cooling assembly is a Stirling cooler that has a safe upper operating temperature limit, and the fluid has a critical point that is less than the safe upper operating temperature limit of the Stirling cooler.

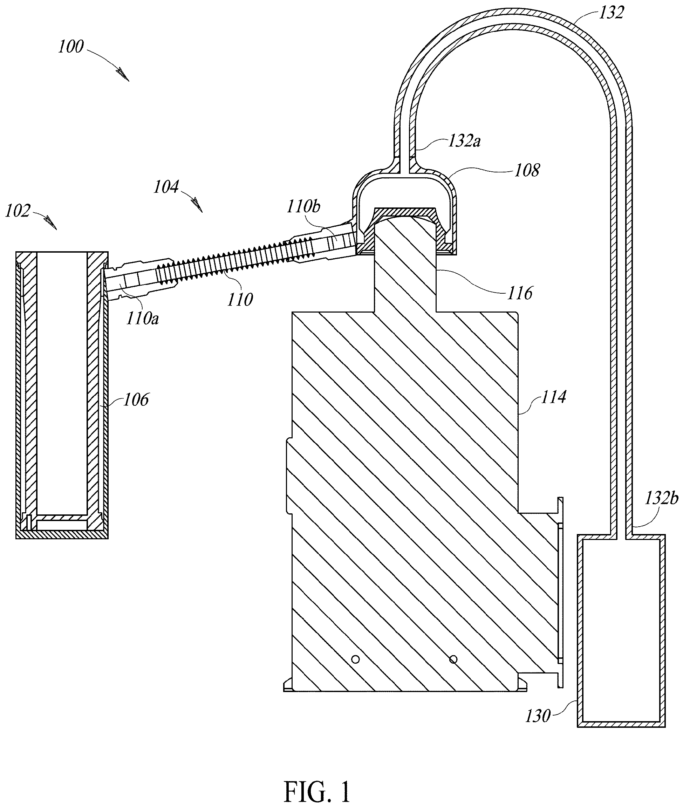

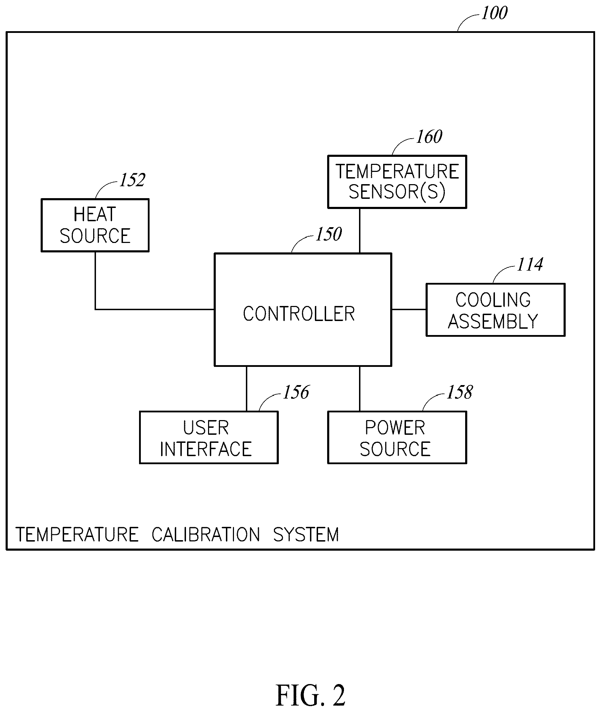

Figure 1 shows a cross-sectional view of a temperature calibration system 100 in accordance with at least one embodiment. The temperature calibration system 100 includes a calibration unit 102 that provides a chamber with a controlled temperature over a temperature range. The temperature calibration system 100 includes a heat source 152 (Figure 2) for heating the calibration unit 102, and a closed fluidic system, such as a thermosiphon 104 or heat pipe, for removing heat from the calibration unit 102.

In some embodiments, the calibration unit 102 is a dry calibration unit that includes a thermally conductive material, such as a metal, and includes one or more openings for receiving one or more device elements to be calibrated, such as probes or thermometers. In other embodiments, the calibration unit 102 includes a liquid bath that is heated by the heat source.

The heat source 152 is any heat source configured to heat the calibration unit 102. In some embodiments, the heat source may include Peltier elements, electrodes, cartridge heaters, or any other suitable heater(s) configured to heat the calibration unit 102.

Heat is transferred away from the calibration unit 102 by the thermosiphon 104. The thermosiphon 104 includes an evaporator 106 that is located at the calibration unit 102, a condenser 108 that is separated from the calibration unit 102, and a connecting tube 110 that places the evaporator 106 in fluid communication with the condenser 108. In particular, a first end 110a of the connecting tube 110 is coupled to a port of the evaporator 106 at the calibration unit 102, and a second end 110b of the connecting tube 110 is coupled to a port of the condenser 108. The evaporator 106, the condenser 108, and the connecting tube 110 together are a closed system containing a fluid therein. The evaporator 106 is configured to allow heat in the calibration unit 102 to transfer to the fluid, which is in a liquid form, and to cause the heated liquid to evaporate into a gas form. The condenser 108 is configured to cool the fluid in the gas form to cause the fluid to condense into a liquid form. The fluid in the various forms moves through the connecting tube 110 between the evaporator 106 and the condenser 108.

In operation, the heat source heats the calibration unit 102, which heats the fluid in the evaporator 106, thereby causing the fluid to vaporize and to travel, in vapor form, from the port of the evaporator 106 through the connecting tube 110 and into the condenser 108. In the condenser 108, the vapor is condensed into liquid form. In the liquid form, the fluid travels with gravity through connecting tube 110 to the evaporator 106 at the calibration unit 102. The calibration unit 102 may again heat the liquid in the evaporator, turning the liquid back into the vapor form, which again is provided back to the condenser 108 through the connecting tube 110. The cycle continues while a desired temperature of the calibration unit 102 is achieved and held.

To aid the condenser 108 in cooling the fluid, the temperature calibration system 100 further includes a cooling assembly 114 that is thermally coupled to the condenser 108. In particular, the cooling assembly 114 acts as a heat sink to remove heat from the condenser 108 to aid the condenser in condensing the liquid. The cooling assembly 114 in the illustrated embodiment is a Stirling cooler. The Stirling cooler includes a cooling head 116 that is thermally coupled to the condenser 108. The cooling head 116 removes heat from the condenser 108, which aids the condenser 108 in converting the vapor therein into the liquid form.

Components of the cooling assembly 114 (in the illustrated embodiment, the Stirling cooler) can be damaged by elevated temperatures, such as temperatures at or above 50°C, that the cooling assembly 114 may be exposed to during operation of the temperature calibration system 100. The upper limit at which the cooling assembly 114 is configured to operate without causing failures to components therein is referred to as a safe upper operating temperature limit. In the embodiments in which the cooling assembly 114 is a Stirling cooler, the safe upper operating temperature limit may be between about 50°C and 60°C.

The fluid used in the thermo siphon 104 is any fluid or refrigerant having a critical point that is less than the safe upper operating temperature limit of the cooling assembly 114. The critical point of a fluid is a temperature above which the fluid will no longer condense. That is, at temperatures above a critical point, the fluid in a closed fluidic system remains in the vapor state. Thus, when the temperatures in the thermosiphon 104 increase to or above the critical point of the fluid therein, all of the fluid is in the vapor state. That is, the fluid in the evaporator 106, connecting tube 110, and the condenser 108 of the thermosiphon 104 will all be in the vapor state. In at least one embodiment, the critical point of the fluid is at least 5°C lower than the safe upper operating temperature limit of the cooling assembly 114, and in other embodiments the critical point of the fluid is at least 10°C lower.

A fluid may also have a critical pressure at which the fluid will no longer condense. That is, fluid above the critical pressure will remain in the vapor state.

While the fluid in the thermosiphon 104 is in the vapor state, the ability of the thermosiphon 104 to cool the calibration unit 102 is substantially limited. Thus, heat is no longer being substantially transferred from the calibration unit 102 to the condenser 108 and similarly, heat transfer from the condenser 108 to the cooling assembly 114 is substantially limited as well.

The temperature calibration system 100 may further include an external chamber 130 that is in fluid communication with the condenser 108 by a conduit 132. In particular, a first end 132a of the conduit 132 is coupled to a port at the upper end of the condenser 108, and a second end 132b of the conduit 132 is coupled to the external chamber 130. The external chamber 130 may reduce pressure in the condenser 108 when the fluid is at the critical point, as well as reduce vapor density, and thereby reduce heat transfer from the condenser 108 to the cooling assembly 114 as well. In this embodiment, the external chamber 130 may be located above or next to the condenser 108.

In another embodiment, the external chamber 130 may be used to aid in cooling the fluid in the condenser 108 when the critical point for the fluid has been obtained. For instance, in the illustrated embodiment, the external chamber 130 is located below the condenser 108 and is exposed to ambient temperatures. When the fluid is at the critical point, the fluid in the condenser 108 is in the gas state and moves through the port at the upper end of the condenser 108 to the external chamber 130, thereby reducing pressure in the condenser 108 as discussed above. The fluid in the gas state in external chamber 130 may condense into the liquid state since the external chamber 130 is at a lower temperature than the condenser 108. As pressure in the condenser 108 reduces, so does the temperature in the condenser 108, thereby causing the liquid and gas to travel from the external chamber 130 back to the condenser 108. Upon the temperature of the condenser 108 reducing below the critical point of the fluid, the thermosiphon 104 begins to operate again as usual.

The cooling assembly 114 may be, for example, any electrically actuated cooling device. In some embodiments, the cooling assembly 114 is a Stirling cooler. Components of a Stirling cooler can be damaged by elevated temperatures, such as temperatures at or above 50°C. The fluid is any fluid having a critical point that is less than the safe upper operating temperature limit of the cooling assembly 114, such as the Stirling cooler. For instance, in the embodiments in which the cooling assembly 114 is a Stirling cooler, the fluid may be a refrigerant, such as R-170, R-508b, R-508a, or R-23. Below is a table illustrating various fluids and the critical point and critical pressure.

**Table 1: Exemplary fluids illustrating critical point and critical pressure**

| Refrigerant | Critical Point, °F/°C | Critical Pressure, PSI |
|---|---|---|
| R-508b | 53.29/11.83 | 549.5 |
| R-508a | 51.52/10.84 | 532.0 |
| R-170 (Ethane) | 89.9/32.16 | 706.6 |
| R-23 | 79.06/26.14 | 700.8 |

In other embodiments, the fluid may be any of ethane, hydrofluorocarbons (HFCs), hydrocarbons (HCs), or any other suitable fluid having a critical point that is less than a safe upper operating temperature limit of the cooling assembly 114.

Figure 2 is a block diagram illustrating some of the electrical components of the temperature calibration system 100 in accordance with at least one embodiment. The temperature calibration system 100 includes a controller 150 coupled to a heat source 152, a cooling assembly 114, a user interface 156, a power source 158, and at least one temperature sensor 160.

The user interface 156 may include various inputs such as a touchscreen display, keyboard, knobs and buttons that allow a user to interact with the controller 150, and outputs, such as a display and lights, for communicating with the user. For instance, the user may input a desired temperature for the calibration unit 102, which is provided to the controller 150.

The controller 150, which may be a microprocessor or other programmed or wired circuitry, includes suitable circuitry and logic for performing various functions during the operation of the temperature calibration system 100. The controller 150 is configured to activate and deactivate the heat source 152 and the cooling assembly 114. In response to receiving the desired temperature from the user interface, the controller 150 may send a signal to the heat source 152 to activate the heat source 152. As mentioned above, the heat source 152 heats the calibration unit 102. The thermosiphon 104 removes heat from the calibration unit 102 as the heat source 152 heats the calibration unit 102.

A temperature sensor 160 is configured to provide a temperature signal to the controller 150. In at least one embodiment, a first temperature sensor 160 is located on the calibration unit 102. Alternatively or additionally, a second temperature sensor 160 is located in the thermosiphon 104, such as the condenser 108 of the thermosiphon 104.

The controller 150 is configured to compare one or more received sensed temperatures to one or more thresholds. In response to a sensed temperature being above a first threshold, the controller 150 may activate the cooling assembly 114. As mentioned above, the cooling assembly 114 is thermally coupled to the condenser 108 and configured to remove heat from the condenser 108.

In the event the temperature of the thermosiphon 104 increases above a second threshold that may be the critical point of the fluid contained therein, the controller 150 may deactivate the cooling assembly 114. While the temperature is at or above the critical point, the fluid in the thermosiphon 104 will be in the vapor phase. The fluid in the vapor phase substantially reduces or eliminates heat transfer from the calibration unit 102 to the thermosiphon 104. Furthermore, heat transfer from the condenser 108 to the cooling assembly 114 is also substantially reduced or eliminated.

As mentioned above, the external chamber 130 is at ambient temperatures, and thus at a lower pressure than the condenser 108 when the condenser 108 contains a vapor at the critical point. Vapor in the condenser 108 travels to the external chamber 130 and, in some embodiments, begins to condense due to the lower temperature of the external chamber 130. At this point, the heat and pressure of the fluid in the condenser 108 are substantially reduced, and thus heat transfer from the condenser 108 to the cooling assembly 114 is substantially reduced, thereby protecting components of the cooling assembly.

As the pressure in the condenser 108 reduces due to fluid flowing to the external chamber 130, the temperature in the condenser 108 also reduces. Due to the reduced pressure in the condenser 108, fluid that traveled from the condenser 108 to the external chamber 130 flows back to the condenser 108. At the reduced pressure and temperature, the condenser 108 begins to condense the fluid therein again. Once the temperature in the thermosiphon 104, and more particularly in the condenser 108, has reduced below the second threshold, which may be the critical point of the fluid, so that some of the fluid in the condenser 108 has changed phase into the liquid phase, the controller 150 may reactivate the cooling assembly 114. The pressure further reduces after the controller 150 has reactivated the cooling unit thus reducing the temperature, as the temperature reduces, the pressure reduces in the condenser which, in some embodiments, draws fluid back from the external chamber. At this point, the thermosiphon 104 operates again in cooperation with the cooling assembly 114 to cool the calibration unit 102. By limiting the critical point of the fluid to being less than a safe upper operating temperature limit of the cooling assembly 114, the cooling assembly 114 is not exposed to temperatures that could harm components therein.

The power source 158 (Figure 2), which can be a battery or a plug for coupling to a main power supply, provides power for operating the temperature calibration system.

Although a thermosiphon is described in the exemplary embodiments provided herein, a person of ordinary skill in the art understands any reference to a thermosiphon in accordance with the present disclosure may also apply to a heat pipe.

Although examples provided herein provide for the critical point of the fluid to be at least 5°C or 10°C lower than the safe upper operating temperature limit of the cooling assembly, the critical point can be any number of degrees less than the safe upper operating temperature limit of the cooling assembly.

Examples provide a temperature calibration system, comprising: a calibration unit configured to receive one or more device elements to be calibrated; a closed fluidic system configured to remove heat from the calibration unit, the closed fluidic system including a condenser and an evaporator; a cooling assembly thermally coupled to the condenser, the cooling assembly having a safe upper operating temperature limit; and fluid in the closed fluidic system, the fluid having a critical point that is less than the safe upper operating temperature limit of the cooling assembly.

In some examples the safe upper operating temperature limit of the cooling assembly is equal to or greater than 50□.

In some examples the cooling assembly is a Stirling cooler and the fluid is a refrigerant selected among one of R-170, R-508b, R-508a, and R-23.

In some examples the closed fluidic system is one of a thermosiphon and a heat pipe.

Some examples further comprise an external chamber in fluid communication with the condenser of the closed fluidic system, the external chamber being configured to aid in reducing at least one of pressure and temperature in the condenser when the temperature of the fluid in the closed fluidic system is at the critical point.

Some examples further comprise a controller electrically coupled to at least one temperature sensor and the cooling assembly, the controller configured to receive a temperature signal from the at least one temperature sensor, the temperature signal being indicative of a sensed temperature in the closed fluidic system, the controller configured to compare the sensed temperature to a threshold temperature and in response to the sensed temperature being above the threshold temperature, the controller is configured to activate the cooling assembly.

In some examples the cooling assembly is a Stirling cooler.

Examples provide a method, comprising: setting a desired temperature of a calibration unit; heating the calibration unit; removing heat from the calibration unit using a closed fluidic system, wherein the closed fluidic system includes a fluid having a critical point; and activating a cooling assembly to remove heat from a component of the closed fluidic system using the cooling assembly, wherein the cooling assembly has a safe upper operating temperature limit that is greater than the critical point of the fluid in the closed fluidic system.

In some examples while the closed fluidic system removes heat from the calibration unit, the fluid in the closed fluidic system reaches the critical point such that all the fluid in the closed fluidic system is in a gas state.

Some examples further comprise receiving a first temperature signal indicative of a first temperature in the closed fluidic system and comparing the first temperature to a threshold, and in response to the first temperature being above the threshold, deactivating the cooling assembly.

Some examples further comprise receiving a second temperature signal indicative of a second temperature in the closed fluidic system and comparing the second temperature to the threshold, and in response to the second temperature being less than the threshold, activating the cooling assembly.

In some examples the fluid is a refrigerant selected among one of R-170, R-508b, R-508a, and R-23.

In some examples the cooling assembly is a Stirling cooler and the safe upper operating temperature limit is a temperature at or above 50□.

In some examples the closed fluidic system is one of a thermosiphon and a heat pipe.

Examples provide a method, comprising: thermally coupling a closed fluidic system to a calibration unit; thermally coupling a cooling assembly to a component of the closed fluidic system, the cooling assembly having a safe upper operating temperature limit; and providing a fluid in the closed fluidic system, the fluid having a critical point that is less than the safe upper operating temperature limit of the cooling assembly.

In some examples the cooling assembly is an electrically actuated cooling assembly.

In some examples the cooling assembly is a Stirling cooler.

In some examples the fluid is a refrigerant selected among the following types: ethane, hydro fluorocarbon, and hydrocarbon.

In some examples the closed fluidic system is a thermosiphon or a heat pipe.

In some examples the safe upper operating temperature limit of the cooling assembly is at or above 50□.

In some examples the fluid is refrigerant selected among one of R-170, R-508b, R-508a, and R-23.

Some examples further comprise: setting a desired temperature of a calibration unit; heating the calibration unit; removing heat from the calibration unit using the closed fluidic system; and activating the cooling assembly to remove heat from a component of the closed fluidic system using the cooling assembly.

In some examples the closed fluidic system removes heat from the calibration unit, the fluid in the closed fluidic system reaches the critical point such that all the fluid in the closed fluidic system is in a gas state.

Some examples further comprise: receiving a first temperature signal indicative of a first temperature in the closed fluidic system and comparing the first temperature to a threshold, and in response to the first temperature being above the threshold, deactivating the cooling assembly; and receiving a second temperature signal indicative of a second temperature in the closed fluidic system and comparing the second temperature to the threshold, and in response to the second temperature being less than the threshold, activating the cooling assembly.

## Claims

1. A temperature calibration system (100), comprising:
a calibration unit (102) configured to receive one or more device elements to be calibrated;
a closed fluidic system (104) configured to remove heat from the calibration unit (102), the closed fluidic system (104) including a condenser (108) and an evaporator (106);
a cooling assembly (114) thermally coupled to the condenser (108), the cooling assembly (114) having a safe upper operating temperature limit; and
fluid in the closed fluidic system (104), **characterized in that** the fluid has a critical point that is less than the safe upper operating temperature limit of the cooling assembly (114).

2. The temperature calibration system of claim 1, wherein the safe upper operating temperature limit of the cooling assembly (114) is equal to or greater than 50°C.

3. The temperature calibration system of claim 1 or 2, wherein the cooling assembly (114) is a Stirling cooler and the fluid is a refrigerant selected among one of R-170, R-508b, R-508a, and R-23.

4. The temperature calibration system of any of claims 1 to 3, wherein the closed fluidic system (104) is one of a thermosiphon (104) and a heat pipe (104).

5. The temperature calibration system of any of claims 1 to 4, further comprising an external chamber (130) in fluid communication with the condenser (108) of the closed fluidic system (104), the external chamber (130) being configured to aid in reducing at least one of pressure and temperature in the condenser (108) when the temperature of the fluid in the closed fluidic system (104) is at the critical point.

6. The temperature calibration system of any of claims 1 to 5, further comprising a controller (150) and at least one temperature sensor (160), wherein the controller (150) is electrically coupled to the at least one temperature sensor (160) and the cooling assembly (114), the controller (150) configured to receive a temperature signal from the at least one temperature sensor (160), the temperature signal being indicative of a sensed temperature in the closed fluidic system (104), the controller (150) configured to compare the sensed temperature to a threshold temperature and in response to the sensed temperature being above the threshold temperature, the controller (150) is configured to activate the cooling assembly (114).

7. A method, comprising:
thermally coupling a closed fluidic system (104) to a calibration unit (102);
thermally coupling a cooling assembly (114) to a component of the closed fluidic system (104), the cooling assembly (114) having a safe upper operating temperature limit; and
providing a fluid in the closed fluidic system (104), **characterized in that** the fluid has a critical point that is less than the safe upper operating temperature limit of the cooling assembly (114).

8. The method of claim 7, wherein the cooling assembly (114) is an electrically actuated cooling assembly or a Stirling cooler.

9. The method of claim 7 or 8, wherein the fluid is a refrigerant selected among the following types: ethane, hydrofluorocarbon, and hydrocarbon.

10. The method of any of claims 7 to 9, wherein the closed fluidic system (104) is a thermosiphon (104) or a heat pipe (104).

11. The method of any of claims 7 to 10, wherein the safe upper operating temperature limit of the cooling assembly (114) is at or above 50°C.

12. The method of any of claims 7, 8, 10 or 11, wherein the fluid is refrigerant selected among one of R-170, R-508b, R-508a, and R-23.

13. The method of any of claims 7 to 12, further comprising:
setting a desired temperature of a calibration unit (102);
heating the calibration unit (102);
removing heat from the calibration unit (102) using the closed fluidic system (104); and
activating the cooling assembly (114) to remove heat from a component of the closed fluidic system (104) using the cooling assembly (114).

14. The method of claim 13, wherein while the closed fluidic system (104) removes heat from the calibration unit (102), the fluid in the closed fluidic system (104) reaches the critical point such that all the fluid in the closed fluidic system (104) is in a gas state.

15. The method of claims 13 or 14, further comprising:
receiving a first temperature signal indicative of a first temperature in the closed fluidic system (104) and comparing the first temperature to a threshold, and in response to the first temperature being above the threshold, deactivating the cooling assembly (114); and
receiving a second temperature signal indicative of a second temperature in the closed fluidic system (104) and comparing the second temperature to the threshold, and in response to the second temperature being less than the threshold, activating the cooling assembly (114).

## Patentansprüche

1. Temperaturkalibrierungssystem (100), umfassend:
eine Kalibrierungseinheit (102), die konfiguriert ist, um ein oder mehrere zu kalibrierende Vorrichtungselemente zu empfangen;
ein geschlossenes fluidisches System (104), das konfiguriert ist, um Wärme aus der Kalibrierungseinheit (102) zu entfernen, wobei das geschlossene fluidische System (104) einen Kondensator (108) und einen Verdampfer (106) beinhaltet;
eine Kühlgruppe (114), die thermisch mit dem Kondensator (108) gekoppelt ist, wobei die Kühlgruppe (114) eine sichere obere Betriebstemperaturgrenze aufweist; und
Fluid im geschlossenen fluidischen System (104), **dadurch gekennzeichnet, dass** das Fluid einen kritischen Punkt aufweist,
der niedriger als die sichere obere Betriebstemperaturgrenze der Kühlgruppe (114) ist.

2. Temperaturkalibrierungssystem nach Anspruch 1, wobei die sichere obere Betriebstemperaturgrenze der Kühlgruppe (114) gleich oder größer als 50°C ist.

3. Temperaturkalibrierungssystem nach Anspruch 1 oder 2, wobei die Kühlgruppe (114) ein Stirling-Kühler ist und das Fluid ein Kühlmittel ist, das aus einem aus R-170, R-508b, R-508a und R-23 ausgewählt ist.

4. Temperaturkalibrierungssystem nach einem der Ansprüche 1 bis 3, wobei das geschlossene fluidische System (104) eines aus einem Thermosiphon (104) und einem Heizrohr (104) ist.

5. Temperaturkalibrierungssystem nach einem der Ansprüche 1 bis 4, ferner umfassend eine externe Kammer (130) in Fluidkommunikation zum Kondensator (108) des geschlossenen fluidischen Systems (104), wobei die externe Kammer (130) konfiguriert ist, um ein Verringern mindestens eines eines Drucks und einer Temperatur im Kondensator (108) zu unterstützen, wenn die Temperatur des Fluids im geschlossenen fluidischen System (104) am kritischen Punkt ist.

6. Temperaturkalibrierungssystem nach einem der Ansprüche 1 bis 5, ferner umfassend eine Steuerung (150) und mindestens einen Temperatursensor (160), wobei die Steuerung (150) mit dem mindestens einen Temperatursensor (160) und der Kühlgruppe (114) elektrisch gekoppelt ist, wobei die Steuerung (150) konfiguriert ist, um ein Temperatursignal von dem mindestens einen Temperatursensor (160) zu empfangen, wobei das Temperatursignal eine erfasste Temperatur im geschlossenen fluidischen System (104) anzeigt, wobei die Steuerung (150) konfiguriert ist, um die erfasste Temperatur mit einer Schwellwerttemperatur zu vergleichen und in Reaktion darauf, dass die erfasste Temperatur über der Schwellwerttemperatur ist, die Steuerung (150) konfiguriert ist, um die Kühlgruppe (114) zu aktivieren.

7. Verfahren, umfassend:
ein thermisches Koppeln eines geschlossenen fluidischen Systems (104) mit einer Kalibrierungseinheit (102);
ein thermisches Koppeln einer Kühlgruppe (114) mit einer Komponente des geschlossenen fluidischen Systems (104), wobei die Kühlgruppe (114) eine sichere obere Betriebstemperaturgrenze aufweist; und
ein Bereitstellen eines Fluids im geschlossenen fluidischen System (104), **dadurch gekennzeichnet, dass** das Fluid einen kritischen Punkt aufweist, der niedriger als die sichere obere Betriebstemperaturgrenze der Kühlgruppe (114) ist.

8. Verfahren nach Anspruch 7, wobei die Kühlgruppe (114) eine elektrisch betätigte Kühlgruppe oder ein Stirling-Kühler ist.

9. Verfahren nach Anspruch 7 oder 8, wobei das Fluid ein Kühlmittel ist, das unter den folgende Typen ausgewählt ist: Ethan, Fluorkohlenwasserstoff oder Kohlenwasserstoff.

10. Verfahren nach einem der Ansprüche 7 bis 9, wobei das geschlossene fluidische System (104) ein Thermosiphon (104) oder ein Heizrohr (104) ist.

11. Verfahren nach einem der Ansprüche 7 bis 10, wobei die sichere obere Betriebstemperaturgrenze der Kühlgruppe (114) gleich oder größer als 50°C ist.

12. Verfahren nach einem der Ansprüche 7, 8, 10 oder 11, wobei das Fluid ein Kühlmittel ist, das aus einem aus R-170, R-508b, R-508a und R-23 ausgewählt ist.

13. Verfahren nach einem der Ansprüche 7 bis 12, ferner umfassend:
ein Einstellen einer gewünschten Temperatur einer Kalibrierungseinheit (102);
ein Erwärmen der Kalibrierungseinheit (102);
ein Entfernen von Wärme aus der Kalibrierungseinheit (102) mithilfe des geschlossenen fluidischen Systems (104); und
ein Aktivieren der Kühlgruppe (114), um Wärme von einer Komponente des geschlossenen fluidischen Systems (104) mithilfe der Kühlgruppe (114) zu entfernen.

14. Verfahren nach Anspruch 13, wobei, während das geschlossene fluidische System (104) Wärme von der Kalibrierungseinheit (102) entfernt, das Fluid im geschlossenen fluidischen System (104) den kritischen Punkt erreicht, so dass das gesamte Fluid im geschlossenen fluidischen System (104) in einem Gaszustand ist.

15. Verfahren nach Ansprüchen 13 oder 14, ferner umfassend:
ein Empfangen eines ersten Temperatursignals, das eine erste Temperatur im geschlossenen fluidischen System (104) anzeigt, und ein Vergleichen der ersten Temperatur mit einem Schwellwert, und in Reaktion darauf, dass die erste Temperatur über dem Schwellwert ist, ein Deaktivieren der Kühlgruppe (114); und
ein Empfangen eines zweiten Temperatursignals, das eine zweite Temperatur im geschlossenen fluidischen System (104) anzeigt, und ein Vergleichen der zweiten Temperatur mit einem Schwellwert, und in Reaktion darauf, dass die zweite Temperatur unter dem Schwellwert ist, ein Aktivieren der Kühlgruppe (114).

## Revendications

1. Système d'étalonnage de température (100), comprenant :
une unité d'étalonnage (102) conçue pour recevoir un ou plusieurs éléments de dispositif à étalonner ;
un système fluidique fermé (104) conçu pour éliminer la chaleur de l'unité d'étalonnage (102), le système fluidique fermé (104) comprenant un condenseur (108) et un évaporateur (106) ;
un ensemble de refroidissement (114) couplé thermiquement au condenseur (108), l'ensemble de refroidissement (114) possédant une limite de température de fonctionnement supérieure sûre ; et
un fluide dans le système fluidique fermé (104), **caractérisé en ce que** le fluide possède un point critique qui est inférieure à la limite de température de fonctionnement supérieure sûre de l'ensemble de refroidissement (114).

2. Système d'étalonnage de température selon la revendication 1, ladite limite de température de fonctionnement supérieure sûre de l'ensemble de refroidissement (114) étant supérieure ou égale à 50°C.

3. Système d'étalonnage de température selon la revendication 1 ou 2, ledit ensemble de refroidissement (114) étant un refroidisseur Stirling et ledit fluide étant un réfrigérant choisi parmi l'un de R-170, R-508b, R-508a et R-23.

4. Système d'étalonnage de température selon l'une quelconque des revendications 1 à 3, ledit système fluidique fermé (104) étant l'un d'un thermosiphon (104) et d'un caloduc (104).

5. Système d'étalonnage de température selon l'une quelconque des revendications 1 à 4, comprenant en outre une chambre externe (130) en communication fluidique avec le condenseur (108) du système fluidique fermé (104), la chambre externe (130) étant conçue pour aider à réduire au moins l'une d'une pression et d'une température dans le condenseur (108) lorsque la température du fluide dans le système fluidique fermé (104) est au niveau du point critique.

6. Système d'étalonnage de température selon l'une quelconque des revendications 1 à 5, comprenant en outre un dispositif de commande (150) et au moins un capteur de température (160), ledit dispositif de commande (150) étant couplé électriquement à l'au moins un capteur de température (160) et à l'ensemble de refroidissement (114), le dispositif de commande (150) étant conçu pour recevoir un signal de température provenant du au moins un capteur de température (160), le signal de température indiquant une température détectée dans le système fluidique fermé (104), le dispositif de commande (150) conçu pour comparer la température détectée à une température seuil et en réponse à une température détectée qui est supérieure à la température seuil, ledit dispositif de commande (150) étant conçu pour activer l'ensemble de refroidissement (114).

7. Procédé, comprenant :
le couplage thermique d'un système fluidique fermé (104) à une unité d'étalonnage (102) ;
le couplage thermique d'un ensemble de refroidissement (114) à un composant du système fluidique fermé (104), l'ensemble de refroidissement (114) possédant une limite de température de fonctionnement supérieure sûre ; et
la fourniture d'un fluide dans le système fluidique fermé (104), **caractérisé en ce que** le fluide possède un point critique qui est inférieur à la limite de température de fonctionnement supérieure sûre de l'ensemble de refroidissement (114).

8. Procédé selon la revendication 7, ledit ensemble de refroidissement (114) étant un ensemble de refroidissement actionné électriquement ou un refroidisseur Stirling.

9. Procédé selon la revendication 7 ou 8, ledit fluide étant un réfrigérant choisi parmi les types suivants : éthane, hydrofluorocarbure et hydrocarbure.

10. Procédé selon l'une quelconque des revendications 7 à 9, ledit système fluidique fermé (104) étant un thermosiphon (104) ou un caloduc (104).

11. Procédé selon l'une quelconque des revendications 7 à 10, ladite limite de température de fonctionnement supérieure sûre de l'ensemble de refroidissement (114) étant supérieure ou égale à 50°C.

12. Procédé selon l'une quelconque des revendications 7, 8, 10 ou 11, ledit fluide étant un réfrigérant choisi parmi l'un de R-170, R-508b, R-508a et R-23.

13. Procédé selon l'une quelconque des revendications 7 à 12, comprenant en outre :
la définition d'une température souhaitée d'une unité d'étalonnage (102) ;
le chauffage de l'unité d'étalonnage (102) ;
l'élimination de la chaleur de l'unité d'étalonnage (102) à l'aide du système fluidique fermé (104) ; et
l'activation de l'ensemble de refroidissement (114) pour éliminer la chaleur d'un composant du système fluidique fermé (104) à l'aide de l'ensemble de refroidissement (114).

14. Procédé selon la revendication 13, tandis que le système fluidique fermé (104) élimine la chaleur de l'unité d'étalonnage (102), ledit fluide dans le système fluidique fermé (104) atteignant le point critique de sorte que tout le fluide dans le système fluidique fermé (104) soit à l'état gazeux.

15. Procédé selon les revendications 13 ou 14, comprenant en outre :
la réception d'un premier signal de température indiquant une première température dans le système fluidique fermé (104) et la comparaison de la première température à un seuil, et en réponse à la première température qui est supérieure au seuil, la désactivation de l'ensemble de refroidissement (114) ; et
la réception d'un second signal de température indiquant une seconde température dans le système fluidique fermé (104) et la comparaison de la seconde température au seuil, et en réponse à la seconde température qui est inférieure au seuil, l'activation de l'ensemble de refroidissement (114).
